# DEMANDE DE BREVET EUROPEEN

(11) **EP 1 632 423 A1**
(43) Date de publication de la demande: **08.03.2006**
(21) Numéro de dépôt: 05291657.4
(22) Date de dépôt: 03.08.2005
(51) Int. Cl.: B62D 25/24, B60H 1/34

(54) **Système aérodynamique pour un véhicule automobile et véhicule automobile équipé d'un tel système aérodynamique**

(30) Priorité: 03.09.2004 FR 0409357
(71) Demandeur: Peugeot Citroen Automobiles SA, 78140 Vélizy Villacoublay (FR)
(72) Inventeur: Hillairet, Blandine, 92150 Suresnes (FR); Aider, Jean-Luc, 92170 Vanves (FR); Selaquet, Didier, 92130 Issy les Moulineaux (FR); Villadier, Bernard, 91370 Verrieres le Buisson (FR); Leroux, Charles, 78830 Bullion (FR)
(74) Mandataire: Lanceplaine, Jean-Claude

(57) **Abrégé**

L'invention concerne un système aérodynamique comprenant au moins un générateur de vortex formé par au moins une ailette (11) disposée dans une zone tourbillonnaire d'au moins un élément de carrosserie du véhicule. Le système comprend un coulisseau (20) déplaçable par coulissement perpendiculairement à la direction de l'ailette et comportant des moyens (21) de pivotement de ladite ailette (11) entre une position escamotée dans un logement ménagé dans l'élément de carrosserie et une position en saillie par rapport audit élément de carrosserie.

L'invention concerne également un véhicule automobile équipé d'au moins un tel système aérodynamique.

## Description

La présente invention concerne un système aérodynamique pour un véhicule automobile et également un véhicule automobile équipé d'un tel système aérodynamique.

Les véhicules automobiles, lorsqu'ils roulent, sont soumis à un certain nombre d'efforts qui s'oppose à leur avancement. Ces efforts sont en particulier les frottements solides, c'est à dire les contacts des roues avec le sol, et les frottements aérodynamiques, comme par exemple les frottements de l'air sur les parois de la carrosserie du véhicule.

En plus de ces frottements, les véhicules automobiles sont soumis à une troisième source d'efforts qui s'oppose également à leur avancement. Ces efforts sont les forces aérodynamiques exercées sur le véhicule à travers des régions de surpression et de dépression. En effet, à haute vitesse, ces efforts deviennent dominant par rapport aux autres et jouent un rôle essentiel sur la consommation et la stabilité du véhicule.

Ces forces aérodynamiques sont essentiellement générées par les dépressions créées par les décollements, les recirculations et les tourbillons longitudinaux de l'air. Les recirculations et donc les régions de basse pression sont importantes sur l'arrière du véhicule et particulièrement au niveau de la lunette arrière et du coffre. En effet, les écoulements de l'air à l'arrière des véhicules automobiles sont complexes et, en général, il se produit un équilibre entre les décollements et les tourbillons longitudinaux.

Les dispositifs utilisés en aérodynamique automobile interviennent sur le décollement qui a lieu sur l'arrière du véhicule, en particulier dans la région du raccord entre le pavillon et la lunette arrière, d'une part, et la lunette arrière et le coffre, d'autre part.

Les dispositifs classiques sont essentiellement constitués par des becquets, des ailerons ou des déflecteurs placés dans ces zones à l'arrière du véhicule.

Le becquet est utilisé le plus souvent pour réduire le coefficient de pénétration dans l'air et la portance et les autres systèmes sont plutôt utilisés pour réduire la portance.

On connaît également des dispositifs aérodynamiques qui sont constitués par une ou plusieurs ailettes formant au moins un générateur de vortex et disposées dans au moins une zone tourbillonnaire d'au moins un élément de la carrosserie du véhicule automobile, comme dans la demande de brevet FR-A-03 05 925 également au nom de la Demanderesse. Les ailettes sont le plus souvent déplaçables entre une position escamotée et une position en saillie dans laquelle elles perturbent les structures tourbillonnaires générées autour des éléments de carrosserie du véhicule.

Mais, l'intégration de ces ailettes sur les éléments de carrosserie impose des contraintes.

En effet, les ailettes doivent impérativement être escamotées lorsque le véhicule est à l'arrêt ou lorsque les vitesses de roulage sont faibles ou lorsque les conditions extérieures nécessitent leur rétraction ou leur non déploiement par exemple en cas d'obstacles tels que la neige, la glace ou des bagages sur le toit.

De plus ces ailettes doivent être le moins visible possible en position rétractée.

Pour le déplacement des ailettes entre la position escamotée et la position déployée plusieurs cinématiques peuvent être envisagées.

La première consiste à déplacer des ailettes verticalement par translation à travers une fente ménagée dans l'élément de carrosserie correspondant.

Mais, si cette disposition présente l'avantage d'être discrète dans la position rétractée des ailettes, elle a pour principal inconvénient d'être très encombrante au niveau du mécanisme de déplacement vertical de ces ailettes. De plus, elle ne permet pas un réglage angulaire des ailettes en fonction des conditions d'utilisation du véhicule.

La seconde cinématique connue pour le déplacement des ailettes consiste à faire pivoter ces ailettes autour d'un axe de rotation disposé dans une empreinte ménagée dans l'élément de carrosserie.

Cette disposition par rapport à la précédente présente l'avantage de pouvoir régler l'angle d'inclinaison de ces ailettes par rapport à l'élément de carrosserie en fonction de l'utilisation du véhicule.

Ainsi, on connaît dans la demande de brevet FR-A-03 09 925 également au nom de la Demanderesse, un dispositif aérodynamique qui comprend des ailettes déplaçables par un ensemble de commande entre une position escamotée et une position déployée en saillie par rapport à l'élément de carrosserie. L'ensemble de commande comprend un axe sur lequel son fixé des ailettes et un moteur électrique entraînant en rotation ledit axe au moyen d'un ensemble d'engrenages.

Mais, ce type de mécanisme de commande du pivotement des ailettes présente l'inconvénient d'être sensible aux agressions extérieures comme par exemple l'eau, la poussière ou encore les insectes ce qui peut nuire à son fonctionnement et à sa fiabilité dans un milieu aussi agressif.

L'invention a pour but de proposer un système aérodynamique qui permet d'éviter les inconvénients précédemment mentionnés et qui permet de contrôler les tourbillons longitudinaux et les décollements et, d'une manière générale, la structure globale de l'écoulement de l'air sur les éléments de la carrosserie d'un véhicule automobile, tout en ayant un fonctionnement fiable.

L'invention a donc pour objet un système aérodynamique pour un véhicule automobile comprenant au moins un générateur de vortex formé par au moins une ailette disposée au moins en amont ou au niveau ou en aval d'au moins une zone tourbillonnaire d'au moins un élément de la carrosserie du véhicule, caractérisé en ce qu'il comprend un coulisseau déplaçable par coulissement perpendiculairement à la direction de l'ailette et comportant des moyens de pivotement de ladite ailette entre une position escamotée dans un logement ménagé dans l'élément de carrosserie et une position en saillie par rapport audit élément.

Selon d'autres caractéristiques de l'invention :
- le générateur de vortex est formé par au moins une ligne d'ailettes déplaçables simultanément par lesdits moyens de pivotement entre les deux positions,
- les moyens de pivotement sont formés par un maneton solidaire de l'ailette et par une rampe hélicoïdale ménagée sur la face supérieure du coulisseau et coopérant avec ledit maneton,
- la face supérieure du coulisseau présente un profil transversal concave en forme d'arc de cercle et la rampe hélicoïdale est formée par une rainure inclinée d'un angle compris entre 5 et 45° par rapport à l'axe de pivotement de ladite ailette,
- le déplacement du coulisseau est piloté au moyen d'un ensemble de commande en fonction d'informations fournies par au moins un capteur de pression et/ou de vitesse et/ou de frottements implanté sur au moins un desdits éléments de carrosserie du véhicule, et
- chaque ailette a par exemple une forme rectangulaire, carrée ou trapézoïdale.

L'invention a aussi pour objet un véhicule automobile, caractérisé en ce qu'il comprend au moins un système aérodynamique tel que précédemment mentionné.

L'invention sera mieux comprise à la lecture de la description qui va suivre, donnée à titre d'exemple et faite en référence aux dessins annexés, sur lesquels :
- la Fig. 1 est une vue schématique en perspective de l'arrière d'un véhicule automobile équipé d'au moins un système aérodynamique conforme à l'invention,
- la Fig. 2 est une vue schématique à plus grande échelle d'un exemple d'implantation d'un système aérodynamique légèrement en amont du raccord transversal entre le pavillon et la lunette arrière d'un véhicule automobile,
- la Fig. 3 est une vue schématique en perspective du système aérodynamique conforme à l'invention, avec les ailettes en position escamotée,
- la Fig. 4 est une vue schématique en coupe transversale selon le plan P de la Fig. 3,
- la Fig. 5 est une vue schématique de dessus d'une portion du coulisseau du système aérodynamique conforme à l'invention,
- les Figs. 6 et 7 sont des vues schématiques en perspective montrant le déploiement des ailettes du système aérodynamique conforme à l'invention.

Les véhicules automobiles, lorsqu'ils roulent sont soumis à des efforts qui s'opposent à leur avancement et qui sont les frottements solides, les frottements aérodynamiques et, à haute vitesse, les forces aérodynamiques générées par les dépressions et par les décollements, les recirculations et les tourbillons longitudinaux de l'air.

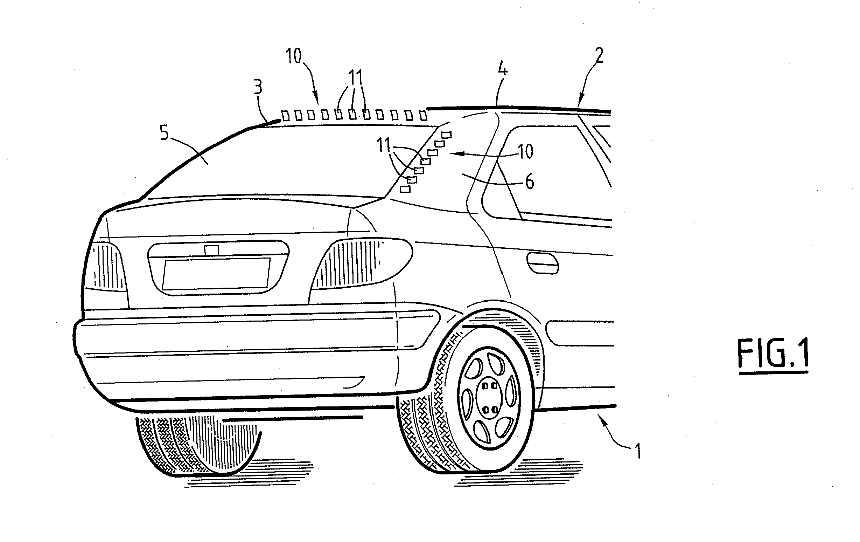

Ainsi, une carrosserie 2 d'un véhicule automobile, comme représenté à la Fig. 1, comporte des régions de basse pression où ces phénomènes sont particulièrement importants.

Ces zones de la carrosserie 2 du véhicule automobile sont par exemple le raccord transversal 3 entre le pavillon 4 et la lunette arrière 5 et les montants de baie arrière 6.

Ces zones de carrosserie sont aussi par exemple les montants de baie avant, le raccord transversal entre le pavillon et le pare-brise, les ailes arrière, les régions entourant les passages de roue et/ou les passages de roue arrière et les régions de soubassement entourant les passages de roue avant et/ou arrière.

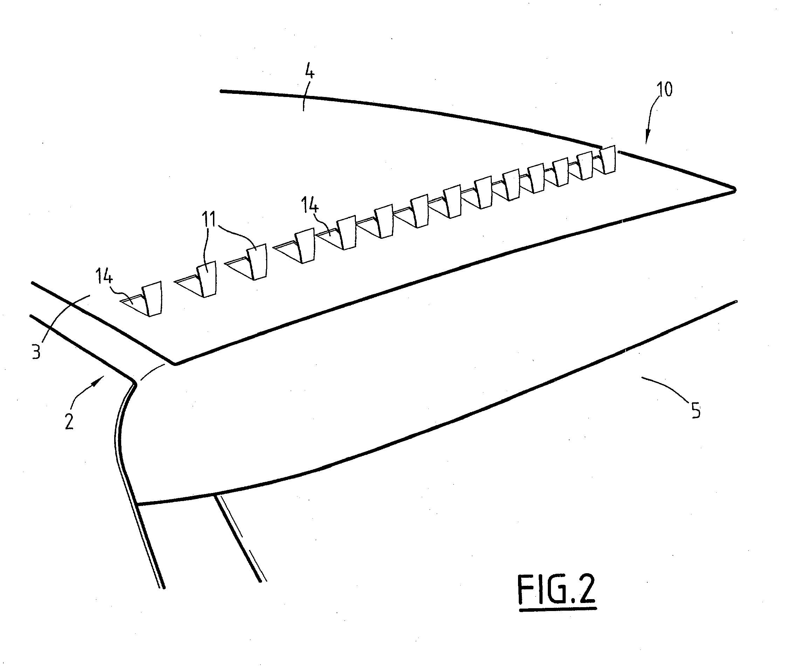

Comme montré sur la Fig. 2, le système aérodynamique selon l'invention est par exemple implanté sur le raccord transversal 3 entre le pavillon 4 et la lunette arrière 5. Les systèmes aérodynamiques implantés sur d'autres zones des éléments de la carrosserie 2 sont identiques.

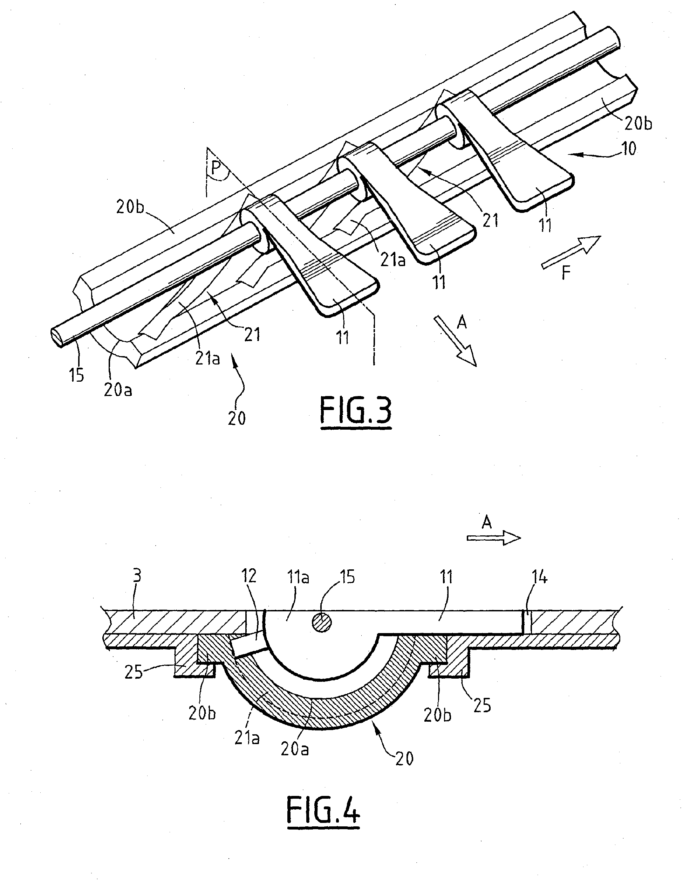

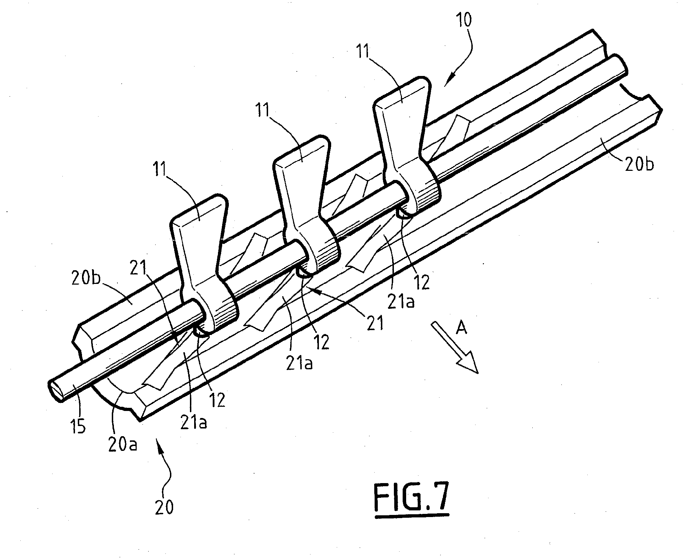

Le système aérodynamique comprend au moins un système de générateur de vortex composé d'au moins une ailette 11. Dans l'exemple de réalisation représenté sur les figures, le système générateur de vortex comprend une ligne 10 d'ailettes 11 disposée au moins légèrement en amont ou au niveau ou légèrement en aval de ladite zone tourbillonnaire et les ailettes 11 de cette ligne 10 sont déplaçables simultanément entre une position escamotée (Figs. 3 et 4) dans laquelle chaque ailette est disposée dans un logement 14 de forme conjuguée et ménagé dans l'élément de carrosserie 3 correspondant et une position déployée en saillie (Figs. 2 et 7) par rapport à cet élément de carrosserie 3 pour réduire la traînée et la portance de ce véhicule automobile.

Sur les Figs. 3 à 7, l'avant du véhicule est désigné par la flèche A.

En se reportant maintenant aux Figs. 3 à 5, on va décrire une ailette 11, ainsi que les moyens de pivotement des ailettes 11 de la ligne 10.

D'une manière générale, chaque ailette 11 est de petites dimensions et de forme déterminée pour générer des tourbillons en aval de cette ailette.

Dans l'exemple de réalisation représenté sur les figures, chaque ailette 11 se présente sous la forme d'un trapèze. La base 11a de chaque ailette 11 est solidaire d'un axe 15 monté libre en rotation sur des supports, non représentés, fixés sur la face interne de l'élément de carrosserie 3.

Le système aérodynamique comprend un coulisseau 20 déplaçable par coulissement perpendiculairement à la direction des ailettes 11, c'est à dire parallèlement à l'axe de rotation 15 de ces ailettes 11 et qui comporte des moyens de pivotement des ailettes 11 de la ligne 10 entre les deux positions.

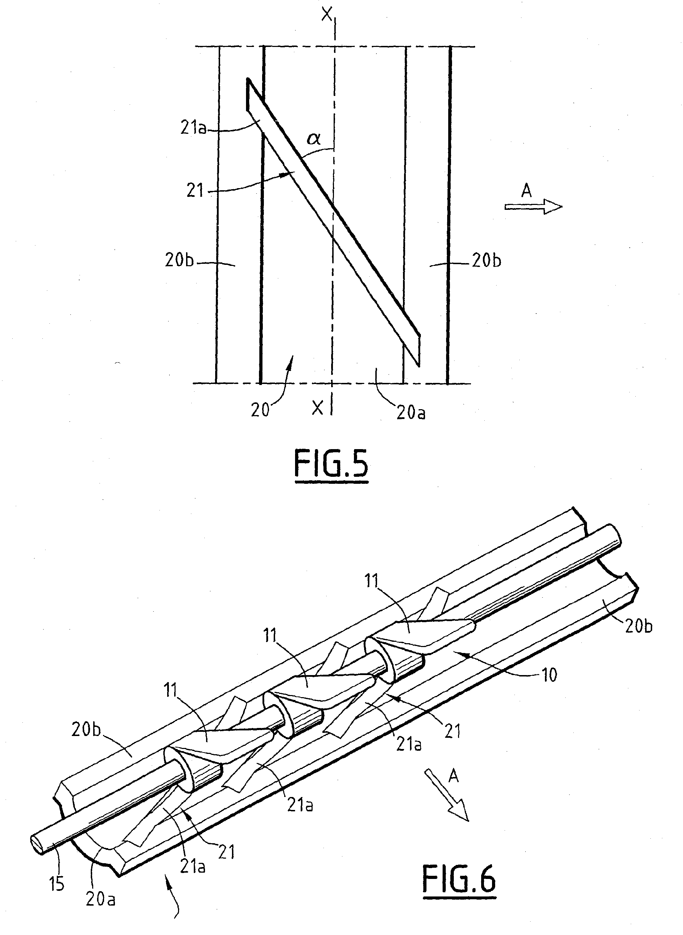

Ainsi que montré sur les Figs. 4 et 5, les moyens de pivotement de chaque ailette 11 sont formés par un maneton 12 solidaire de la base 11 a de l'ailette 11 correspondante et par une rampe hélicoïdale 21 ménagée sur la face supérieure 20a du coulisseau 20 et dans laquelle est positionnée l'extrémité libre du maneton 12 de l'ailette 11 correspondante. La rampe 21 peut avoir tout autre forme appropriée.

Pour cela, la face supérieure 20a du coulisseau 20 présente un profil transversal concave en forme d'arc de cercle, comme montré à la Fig. 4, et la rampe hélicoïdale 21 est formée par une rainure 21 a inclinée d'un angle α compris entre 5 et 45° par rapport à l'axe de pivotement 15 de l'ailette 11 et qui est schématisée par le trait d'axe XX sur la Fig. 5.

La combinaison de la forme de la face supérieure 20a du coulisseau 20 et de l'inclinaison de la rainure 21 permet donc d'obtenir une rampe hélicoïdale.

Le coulisseau 20 est déplaçable par coulissement sur la face intérieure de l'élément de carrosserie 3 au moyen par exemple de deux glissières 25 qui coopèrent chacune avec un bord latéral longitudinal 20b de la plaque 20, ainsi que montré à la Fig. 4.

Le guidage en translation du coulisseau 20 peut être obtenu par tout autre système approprié.

Enfin, le déplacement en translation de la plaque 20 est réalisé par un ensemble de commande constitué notamment par un mécanisme classique de type connu, comme par exemple des vérins, des câbles, un système vis/écrou ou tout autre mécanisme.

Lorsque le coulisseau 20 est entraîné en translation par coulissement dans les glissières de guidage 25 selon la direction indiquée par la flèche F sur la Fig. 3, l'axe de rotation 15 et les ailettes 11 pivotent progressivement du fait que la translation ainsi induite engendre la rotation de ces ailettes 11 grâce à chaque maneton 12 qui glisse dans une rainure 21 a. Le mouvement de translation du coulisseau 20 provoque le mouvement en rotation de chaque ailette 11 de la position escamotée intégrée dans chaque logement 14 (Fig. 3) dans laquelle elle affleure la surface de l'élément de carrosserie 3 et la position en saillie par rapport à cet élément de carrosserie 3 représentée sur les Figs. 6 et 7.

Pour ramener les ailettes 11 dans la position escamotée à l'intérieur des logements 14, le coulisseau 20 est entraîné en sens inverse.

Selon les conditions d'utilisation du véhicule automobile, les ailettes 11 de la ligne 10 peuvent être plus ou moins en saillie par rapport à l'élément de carrosserie 3 et l'angle entre chaque ailette 11 et cet élément de carrosserie 3 est donc plus ou moins important.

A cet effet, le déplacement du coulisseau 20 commandant le pivotement des ailettes 11 peut être piloté en fonction d'informations fournies par au moins un capteur de pression et/ou de vitesse et/ou de frottements implanté sur au moins un des éléments de la carrosserie du véhicule automobile.

Par ailleurs, les ailettes 11 peuvent être déplacées entre les positions escamotée et en saillie, par exemple lors d'un freinage d'urgence. Dans ce cas, le coulisseau 20 est déplacé très rapidement de façon à améliorer la portance arrière du véhicule et à aider le conducteur à garder le contrôle de ce véhicule.

Enfin, le déplacement des ailettes 11 peut aussi être piloté directement par l'utilisateur du véhicule.

Le coulisseau 20 et les moyens de commande du déplacement de ce coulisseau 20 sont suffisamment robustes pour supporter les efforts aérodynamiques exercés sur les ailettes par les écoulements de l'air et aussi permettre la réintégration de ces ailettes en position escamotée même lorsque le véhicule roule à haute vitesse.

Chaque ailette 11 perturbatrice d'écoulement présente donc une forme déterminée qui génère des tourbillons en aval de cette ailette 11 ce qui permet de réduire la traînée et la portance du véhicule, qu'il soit monospace, bicorps ou tricorps. Les ailettes 11 peuvent présenter diverses formes, comme par exemple une forme rectangulaire, carrée ou encore trapézoïdale.

Derrière chaque ailette 11, il se produit également une zone de recirculation. Ces ailettes perturbent les structures tourbillonnaires générées autour des éléments de carrosserie du véhicule automobile.

Le système aérodynamique selon l'invention a pour avantage de présenter un faible encombrement au-dessous de l'élément de carrosserie et a un aspect discret de qui ne nuit pas à l'esthétique général du véhicule automobile.

## Revendications

1. Système aérodynamique pour un véhicule automobile comprenant au moins un générateur de vortex formé par au moins une ailette (11) disposée au moins en amont ou au niveau ou en aval d'au moins une zone tourbillonnaire d'un élément (4, 5, 6) de la carrosserie (2) du véhicule, **caractérisé en ce qu'**il comprend un coulisseau (20) déplaçable par coulissement perpendiculairement à la direction de l'ailette (11) et comportant des moyens (12, 21) de pivotement de ladite ailette (11) entre une position escamotée dans un logement (14) ménagé dans l'élément de carrosserie (4, 5, 6) et une position en saillie par rapport audit élément.

2. Système aérodynamique selon la revendication 1, **caractérisé en ce que** ledit générateur de vortex est formé par au moins une ligne (10) d'ailettes (11) déplaçables simultanément par lesdits moyens de pivotement entre les deux positions.

3. Système aérodynamique selon la revendication 1 ou 2, **caractérisé en ce que** les moyens de pivotement sont formés par un maneton (12) solidaire de l'ailette (11) et par une rampe hélicoïdale (21) ménagée sur la face supérieure (20a) du coulisseau (20) et coopérant avec ledit maneton (12).

4. Système aérodynamique selon la revendication 3, **caractérisé en ce que** la face supérieure (20a) du coulisseau (20) présente un profil transversal concave en forme d'arc de cercle et la rampe hélicoïdale (21) est formée par une rainure (21a) inclinée d'un angle compris entre 5 et 45° par rapport à l'axe de pivotement (15) de ladite ailette (11).

5. Système aérodynamique selon l'une quelconque des revendications 1 à 4, **caractérisé en ce que** le déplacement du coulisseau (20) est piloté au moyen d'un ensemble de commande en fonction d'informations fournies par au moins un capteur de pression et/ou de vitesse et/ou de frottements implanté sur au moins un des éléments (4, 5, 6) de carrosserie du véhicule.

6. Système aérodynamique selon l'une quelconque des revendications 1 à 5, **caractérisé en ce que** chaque ailette (11) a par exemple une forme rectangulaire, carrée ou trapézoïdale.

7. Véhicule automobile, **caractérisé en ce qu'**il comporte au moins un système aérodynamique selon l'une quelconque des revendications précédentes.
